(19) Europäisches Patentamt
European Patent Office
Office européen des brevets

(11) **EP 3 652 570 B1**

(12) **EUROPÄISCHE PATENTSCHRIFT**

(45) Veröffentlichungstag und Bekanntmachung des Hinweises auf die Patenterteilung:
**12.04.2023   Patentblatt 2023/15**

(21) Anmeldenummer: **17739551.4**

(22) Anmeldetag: **12.07.2017**

(51) Internationale Patentklassifikation (IPC):
**G02B 5/30** (2006.01)       **H01S 3/10** (2006.01)
**G02B 27/28** (2006.01)       **B23K 26/064** (2014.01)

(52) Gemeinsame Patentklassifikation (CPC):
**B23K 26/21; B23K 26/064; B23K 26/38;**
**G02B 5/3066; G02B 5/3075; G02B 27/28;**
H01S 3/005

(86) Internationale Anmeldenummer:
**PCT/EP2017/067480**

(87) Internationale Veröffentlichungsnummer:
**WO 2019/011419 (17.01.2019 Gazette 2019/03)**

(54) **POLARISATORANORDNUNG UND EUV-STRAHLUNGSERZEUGUNGSVORRICHTUNG MIT EINER POLARISATORANORDNUNG**

POLARISER ARRANGEMENT AND EUV RADIATION GENERATING DEVICE COMPRISING A POLARISER ARRANGEMENT

DISPOSITIF DE POLARISATION ET DISPOSITIF DE GÉNÉRATION DE FAISCEAU EUV COMPRENANT UN DISPOSITIF DE POLARISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**20.05.2020   Patentblatt 2020/21**

(73) Patentinhaber: TRUMPF Lasersystems for Semiconductor Manufacturing GmbH
**71254 Ditzingen (DE)**

(72) Erfinder: **ERGIN, Tolga**
**74321 Bietigheim-Bissingen (DE)**

(74) Vertreter: **Kohler Schmid Möbus Patentanwälte Partnerschaftsgesellschaft mbB**
**Gropiusplatz 10**
**70563 Stuttgart (DE)**

(56) Entgegenhaltungen:
DE-A1-102014 105 064     US-A1- 2003 086 451

• **GEORGE R. BIRD ET AL: "Pile-of-Plates Polarizers for the Infrared: Improvement in Analysis and Design", JOURNAL OF THE OPTICAL SOCIETY OF AMERICA, Bd. 49, Nr. 3, 1. März 1959 (1959-03-01), Seite 235, XP055448086, US ISSN: 0030-3941, DOI: 10.1364/JOSA.49.000235**
• **NARAYAN P. MURARKA ET AL: "Extinction ratio of germanium wedge-plate infrared polarizers", APPLIED OPTICS, Bd. 20, Nr. 19, 1. Oktober 1981 (1981-10-01), Seite 3275, XP055448088, WASHINGTON, DC; US ISSN: 0003-6935, DOI: 10.1364/AO.20.003275**

**Beschreibung**

Die vorliegende Erfindung betrifft eine Polarisatoranordnung zur Polarisation eines Laserstrahls, umfassend: eine Mehrzahl von im Strahlweg des Laserstrahls angeordneten plattenförmigen optischen Elementen, die jeweils eine Strahleintrittsfläche für den Laserstrahl und eine Strahlaustrittsfläche für den Laserstrahl aufweisen, wobei die Strahleintrittsfläche eines jeweiligen plattenförmigen optischen Elements (in der jeweiligen Einfallsebene) unter dem Brewster-Winkel zu dem Laserstrahl ausgerichtet ist. Die Erfindung betrifft auch eine EUV-Strahlungserzeugungsvorrichtung mit einer solchen Polarisatoranordnung.

Ein plattenförmiges transmittierendes optisches Element kann zur Polarisation von Licht, beispielsweise in Form eines (z.B. unpolarisierten) Laserstrahls, verwendet werden, wenn der Laserstrahl an einer Strahleintrittsfläche des optischen Elements unter dem so genannten Brewster-Winkel auftrifft. Ein an der Strahleintrittsfläche reflektierter Strahlungsanteil ist in diesem Fall nahezu ausschließlich senkrecht zur Einfallsebene des Laserstrahls auf die Strahleintrittsfläche polarisiert (s-Polarisation), d.h. die Reflektivität für einen zweiten, dazu senkrechten (p-polarisierten) Strahlungsanteil ist nahezu Null. Ein von der Strahleintrittsfläche transmittierter Strahlungsanteil weist daher typischerweise einen hohen p-polarisierten Strahlungsanteil auf, der parallel zur Einfallsebene des auftreffenden Laserstrahls verläuft.

In Transmission betriebene Polarisatoren können auch bei Hochleistungs-Anwendungen eingesetzt werden, bei denen der Laserstrahl eine Leistung von mehreren hundert Watt aufweist, wie dies beispielsweise bei Laserbearbeitungsmaschinen zum Bearbeiten, z.B. zum Schneiden oder zum Schweißen, von Werkstücken oder bei EUV-Strahlungserzeugungsvorrichtungen der Fall ist, bei denen ein Hochleistungs-Laserstrahl auf ein Target-Material gerichtet wird, um dieses in einen Plasmazustand überzuführen und auf diese Weise EUV-Strahlung zu erzeugen.

An der Strahleintrittsfläche eines in Transmission betriebenen Polarisators kann eine polarisationsselektive Beschichtung gebildet sein, um die Reflektivität der Polarisator-Fläche für den s-polarisierten Strahlungsanteil des Laserstrahls zu erhöhen bzw. um die Trennung der senkrecht zueinander polarisierten Strahlungsanteile zu verstärken. Derartige Polarisatoren werden auch als Dünnfilm-Polarisatoren ("thin film polarizer", TFP) bezeichnet. Bei hohen Laserleistungen tritt bei Dünnfilm-Polarisatoren das Problem auf, dass durch die Absorption der Laserstrahlung in der polarisationsselektiven Beschichtung eine temperaturabhängige Änderung des Brechungsindexes entsteht, die eine so genannte thermische Linse zur Folge hat. Dünnfilm-Polarisatoren können daher bei Hochleistungs-Anwendungen in der Regel nur für den Fall eingesetzt werden, dass zusätzliche Maßnahmen zur Kompensation der thermischen Linse ergriffen werden. Alternativ oder zusätzlich zu einer polarisationsselektiven Beschichtung kann eine Polarisatoranordnung nicht nur eine, sondern mehrere transmittierende optische Elemente in Form von planparallelen Platten aufweisen, die parallel zueinander und jeweils mit ihrer Strahleintrittsfläche unter dem Brewster-Winkel zum einfallenden Laserstrahl ausgerichtet sind, um den vergleichsweise kleinen s-polarisierten Strahlungsanteil, der von einer jeweiligen planparallelen Platte transmittiert wird, weiter zu verringern, so dass der aus der Polarisatoranordnung austretende Laserstrahl nahezu ausschließlich p-polarisiert ist.

Insbesondere für den Fall, dass die planparallelen Platten in einem vergleichsweise geringen Abstand voneinander angeordnet sind, tritt jedoch das Problem von konstruktiver und destruktiver Interferenz zwischen Teilstrahlen auf, die an den Strahleintrittsflächen bzw. an den Strahlaustrittsflächen der planparallelen Platten reflektiert werden. Um Interferenzen zu verhindern, wird der Abstand zwischen im Strahlweg aufeinander folgenden Platten daher typischerweise so groß gewählt, dass sich die reflektierten Teilstrahlen nicht überlappen. Die Polarisatoranordnung benötigt in diesem Fall jedoch einen ggf. erheblichen Bauraum, was eine wesentliche Einschränkung darstellt, sofern kein ausreichender Bauraum zur Verfügung steht.

Relevante Dokumente nützlich um die Erfindung zu verstehen, sind GEORGE R. BIRD ET AL: "Pile-of-Plates Polarizers for the Infrared: Improvement in Analysis and Design", JOURNAL OF THE OPTICAL SOCIETY OF AMERICA, Bd. 49, Nr. 3, 1. März 1959 (1959-03-01), Seite 235 und NARAYAN P. MURARKA ET AL: "Extinction ratio of germanium wedge-plate infrared polarizers", APPLIED OPTICS, Bd. 20, Nr. 19, 1. Oktober 1981 (1981-10-01), Seite 3275.

Aufgabe der Erfindung

Der Erfindung liegt die Aufgabe zugrunde, eine Polarisatoranordnung der eingangs genannten Art in einer kompakten Bauweise herzustellen sowie eine EUV-Strahlungserzeugungsvorrichtung mit einer solchen Polarisatoranordnung bereitzustellen.

Gegenstand der Erfindung

Diese Aufgabe wird gemäß einem ersten Aspekt gelöst durch eine Polarisatoranordnung der eingangs genannten Art, bei der die Strahleintrittsflächen und die Strahlaustrittsflächen der plattenförmigen optischen Elemente jeweils unter mindestens einem Keilwinkel zueinander ausgerichtet sind.

Durch die (gezielte) Abweichung von der parallelen Ausrichtung der (planen) Strahleinfallsfläche von der (planen) Strahlaustrittsfläche eines jeweiligen plattenförmigen optischen Elements durch das Vorsehen eines (kleinen) Keils bzw. Keilwinkels können die weiter oben beschriebenen Interferenz-Effekte (im Folgenden auch als Fabry-Perot-Effekte bezeichnet) weitestgehend verhindert werden. Um trotz des Keilwinkels die Brewster-Bedingung zu erfüllen, werden die plattenförmigen optischen Elemente derart zueinander ausgerichtet (typischerweise relativ zueinander verdreht), dass der Laserstrahl weiterhin unter dem Brewster-Winkel auf die Strahleintrittsflächen auftrifft. Im Sinne dieser Anmeldung wird unter dem Auftreffen "unter dem Brewster-Winkel" $\alpha_B$ ein Auftreffen des Laserstrahls mit einer Abweichung vom Brewster-Winkel $\alpha_B$ in der Größenordnung von ca. +/- 0,5° verstanden, d.h. auch Winkel $\alpha_B$ +/- 0,5° fallen unter den Begriff "unter dem Brewster-Winkel".

Durch das Vorsehen eines Keilwinkels kann verhindert werden, dass an den im Strahlweg des Laserstrahls nacheinander angeordneten plattenförmigen optischen Elementen zwei oder mehr parallele Flächen auftreten, oder - sofern dies doch der Fall sein sollte - dass es zwischen den beiden parallelen Flächen zu einer konstanten optischen Weglänge zwischen benachbarten reflektierten Teilstrahlen kommt, die Interferenz-Effekte zur Folge haben können. Durch die Anordnung von mehreren in geringem Abstand zueinander angeordneten plattenförmigen optischen Elementen mit einem jeweiligen Keilwinkel kann trotz geringen Bauraums eine hohe Extinktion für die s-polarisierte Strahlungskomponente erzeugt werden, ohne dass hierbei die weiter oben beschriebenen Fabry-Perot-Effekte auftreten.

Die Strahleintrittsflächen und die Strahlaustrittsflächen der plattenförmigen optischen Elemente können grundsätzlich beliebig (windschief) zueinander im Raum orientiert werden, sofern sichergestellt ist, dass die Strahleintrittsflächen jeweils unter dem Brewster-Winkel zum Laserstrahl ausgerichtet sind. Mindestens ein plattenförmiges optisches Element der Polarisatoranordnung kann nicht nur einen, sondern zwei Keilwinkel aufweisen, die in zwei typischerweise zueinander senkrechten Ebenen verlaufen. Eine windschiefe Ausrichtung der plattenförmigen optischen Elemente und/oder die Verwendung von plattenförmigen optischen Elementen mit zwei Keilwinkeln können vorteilhaft sein, um Fabry-Perot-Effekte zu minimieren.

Erfindungsgemäß liegt bei mindestens einem plattenförmigen optischen Element der bzw. ein Keilwinkel in einer Einfallsebene des Laserstrahls auf die Strahleintrittsfläche des plattenförmigen optischen Elements. Die Keilwinkel aller plattenförmigen optischen Elemente können insbesondere in einer gemeinsamen Ebene liegen, die typischerweise der Einfallsebene des Laserstrahls auf das erste plattenförmige optische Element entspricht. In diesem Fall verlaufen die Strahleintrittsflächen und die Strahlaustrittsflächen der plattenförmigen optischen Elemente, zwischen denen die Keilspitzen gebildet sind, entlang von Ebenen, die typischerweise senkrecht zur Einfallsebene des Laserstrahls ausgerichtet sind. Die Keilspitze eines jeweiligen plattenförmigen optischen Elements ist definiert als die Schnittgerade zwischen der Strahleintrittsfläche und der Strahlaustrittsfläche eines jeweiligen plattenförmigen optischen Elements in der jeweiligen Ebene, in welcher der Keilwinkel liegt. Aufgrund des in der Regel kleinen Keilwinkels ist die Keilspitze der plattenförmigen optischen Elemente typischerweise nicht in deren Volumen enthalten, d.h. die Strahleintrittsfläche und die Strahlaustrittsfläche treffen nicht im Volumen des plattenförmigen optischen Elements aufeinander.

Bei einer weiteren Ausführungsform liegt bei mindestens einem plattenförmigen optischen Element der Keilwinkel in einer senkrecht zur Einfallsebene des Laserstrahls auf die Strahleintrittsfläche verlaufenden Ebene. Die Einfallsebene wird durch die Strahlrichtung des auf die Strahleintrittsfläche einfallenden Laserstrahls und die Normalenrichtung der Strahleintrittsfläche definiert. Der Laserstrahl trifft in der Einfallsebene unter dem Brewster-Winkel auf die Strahleintrittsfläche auf. Der Winkel, unter dem der Laserstrahl in einer Ebene senkrecht zur Einfallsebene in Bezug auf die Strahleintrittsfläche ausgerichtet ist, liegt nahe bei 0°, d.h. der Laserstrahl tritt in dieser Ebene im Wesentlichen parallel der Normalenrichtung in die Strahleintrittsfläche ein. Aufgrund des deutlich kleineren Einfallswinkels in der Ebene senkrecht zur Einfallsebene ist die Wahrscheinlichkeit für das Auftreten von unerwünschter Totalreflexion an der Strahleintrittsfläche bzw. an der Strahlaustrittsfläche des plattenförmigen optischen Elements kleiner als in der Einfallsebene. Daher kann es vorteilhaft sein, wenn das plattenförmige optische Element den bzw. einen Keilwinkel in der Ebene senkrecht zur Einfallsebene des Laserstrahls aufweist.

Erfindungsgemäß liegt bei mindestens einem plattenförmigen optischen Element ein erster Keilwinkel in einer Einfallsebene des Laserstrahls auf die Strahleintrittsfläche und ein zweiter Keilwinkel liegt in einer senkrecht zur Einfallsebene des Laserstrahls auf die Strahleintrittsfläche verlaufenden Ebene. Es hat sich als günstig erwiesen, in der Polarisatoranordnung mindestens ein plattenförmiges optisches Element zu verwenden, das zwei (ggf. unterschiedliche) Keilwinkel in zwei zueinander senkrechten Ebenen aufweist, um Fabry-Perot-Effekte weiter zu reduzieren. Insbesondere kann bei einer geeigneten Anordnung eines solchen plattenförmigen optischen Elements verhindert werden, dass die Strahleintrittsflächen und/oder die Strahlaustrittsflächen von zwei unterschiedlichen plattenförmigen optischen Elementen parallel zueinander ausgerichtet sind.

Bei einer Ausführungsform weisen die plattenförmigen optischen Elemente jeweils denselben Keilwinkel in einer Einfallsebene des Laserstrahls auf die jeweilige Strahleintrittsfläche und/oder jeweils denselben Keilwinkel in einer senkrecht zur Einfallsebene des Laserstrahls verlaufenden Ebene auf. Da der Keilwinkel typischerweise vergleichsweise klein ist, können unterschiedliche Keilwinkel mit bloßem Auge in der Regel nicht unterschieden werden, so dass beim Aufbau der Polarisatoranordnung ggf. eine Kennzeichnung der optischen Elemente erforderlich ist. Auch für die Ausrichtung der plattenförmigen optischen Elemente relativ zueinander ist es vorteilhaft, wenn alle plattenförmigen optischen Elemente in einer jeweiligen Ebene denselben Keilwinkel aufweisen.

Bei einer weiteren Ausführungsform liegt der Keilwinkel bei weniger als 1,0°, bevorzugt bei weniger als 0,5°. Typischerweise ist ein vergleichsweise kleiner Keil bzw. Keilwinkel ausreichend, um die weiter oben beschriebenen Fabry-Perot-Effekte zu unterdrücken. Der Keilwinkel sollte allerdings so groß gewählt werden, dass eine räumliche Separation und/oder eine Winkel-Separation des Hauptstrahls von den reflektierten Teilstrahlen erfolgen kann. Zu diesem Zweck kann ggf. ein optischer Filter, beispielsweise ein Raumfilter, verwendet werden, der im Strahlengang des austretenden Laserstrahls angeordnet ist. Kein an den jeweiligen Strahleintritts- bzw. Strahlaustrittsflächen reflektierter Teil-Strahl sollte mit dem Hauptstrahl überlappen, um die Fabry-Perot- bzw. Etalon-Effekte wirksam zu unterdrücken.

Bei einem keilförmigen optischen Element gilt für den Keilwinkel $\gamma$, den Einfallswinkel $\alpha$ (beispielsweise den Brewster-Winkel $\alpha_B$) sowie den Ablenk-Winkel $\delta$, unter dem der Laserstrahl beim Austritt aus einem keilförmigen plattenförmigen optischen Element vom Einfallswinkel $\alpha$, genauer gesagt von der Strahlrichtung des einfallenden Laserstrahls abweicht, folgende Formel:

$$\delta = \alpha - \gamma + \sin^{-1}\left[\sin(\gamma)\sqrt{n^2 - \sin^2\alpha} - \sin\alpha \cos\gamma\right] , \qquad (1)$$

wobei n den Brechungsindex des transmittierenden Materials des plattenförmigen optischen Elements bezeichnet. Die Formel (1) gilt allgemein, d.h. sowohl für den Fall, dass der Einfallswinkel $\alpha$, der Keilwinkel $\gamma$ und der Ablenk-Winkel $\delta$ in der Einfallsebene liegen, als auch für den Fall, dass diese Winkel in einer Ebene senkrecht zur Einfallsebene liegen. Die Strahleintrittsfläche des im Strahlweg auf das erste plattenförmige optische Element folgenden zweiten plattenförmigen optischen Elements kann beispielsweise um den (negativen) Ablenk-Winkel -$\delta$ gedreht ausgerichtet werden, um die Winkelabweichung zu korrigieren und dadurch sicherzustellen, dass die Strahleintrittsfläche des zweiten plattenförmigen optischen Elements ebenfalls die Brewster-Bedingung erfüllt.

Der Brewster-Winkel $\alpha_B$ an der Strahleintrittsfläche bzw. generell an einer Grenzfläche zwischen einem optisch dünneren und einem optisch dichteren Medium ist durch folgende Formel gegeben:

$$\alpha_B = \arctan(n_2 / n_1), \qquad (2)$$

wobei $n_2$ den Realteil des Brechungsindexes des optisch dichteren Mediums und $n_1$ den Realteil des Brechungsindexes des optisch dünneren Mediums bezeichnet (typischerweise Luft bzw. Vakuum mit $n_1$ = 1,00). Der Brewster-Winkel $\alpha_B$ ist somit bei einer in Umgebungsluft angeordneten Polarisatoranordnung durch den Brechungsindex $n_2$ des transmissiven Materials bestimmt, an dem die Strahleintrittsfläche gebildet ist.

Handelt es sich bei dem Laserstrahl um einen $CO_2$-Laserstrahl mit einer Wellenlänge von ca. 10,59 $\mu$m, kann es sich bei dem transmittierenden Material beispielsweise um Zinkselenid (ZnSe) handeln, welches bei dieser Wellenlänge einen Brechungsindex $n_2$ von 2,4027 aufweist. Gemäß obiger Formel (2) ergibt sich in diesem Fall ein Brewster-Winkel von $\alpha_B$ = 67,4032°. Die Art des transmittierenden Materials ist an die Wellenlänge des verwendeten Laserstrahls angepasst. Bei kleineren Wellenlängen im nahen IR-Wellenlängenbereich bzw. im sichtbaren Wellenlängenbereich kann beispielsweise Quarzglas als Material für das plattenförmige optische Element verwendet werden. Insbesondere kann bei der hier beschriebenen Polarisatoranordnung auf das Vorsehen einer polarisationsselektiven Beschichtung an den plattenförmigen optischen Elementen verzichtet werden. Daher können in der Polarisatoranordnung ausschließlich transmittierende Materialien verwendet werden, die eine geringe Absorption und damit auch bei hohen Laserleistungen nur eine geringe thermische Linse aufweisen.

Bei einer Ausführungsform weisen jeweils zwei im Strahlweg des Laserstrahls aufeinander folgende plattenförmige optische Elemente in Strahlrichtung des einfallenden Laserstrahls einen minimalen Abstand von weniger als 5 mm, bevorzugt von weniger als 2 mm, insbesondere von weniger als 1 mm voneinander auf. Wie weiter oben beschrieben wurde, können mit Hilfe der Keilwinkel Fabry-Perot-Interferenzeffekte verhindert bzw. stark reduziert werden, so dass die plattenförmigen optischen Elemente in einem sehr geringen Abstand zueinander angeordnet werden können, wobei die plattenförmigen optischen Elemente in einem derart geringen Abstand zueinander angeordnet werden können, dass diese sich (annähernd) berühren.

Bei einer weiteren Ausführungsform sind bei mindestens zwei im Strahlweg des Laserstrahls aufeinander folgenden plattenförmigen optischen Elementen die Strahleintrittsflächen und die Strahlaustrittsflächen nicht parallel zueinander ausgerichtet. Insbesondere können bei allen im Strahlweg des Laserstrahls angeordneten plattenförmigen optischen Elementen die Strahleintrittsflächen und die Strahlaustrittsflächen nicht parallel zueinander ausgerichtet sein. Durch die nicht parallele Ausrichtung der jeweiligen Strahleintritts- und Strahlaustrittsflächen der plattenförmigen optischen Elemente können die weiter oben beschriebenen Interferenz-Effekte vermieden werden. Für den Fall, dass die Keilwinkel der plattenförmigen optischen Elemente in einer gemeinsamen Ebene liegen, bedeutet die nicht parallele Ausrichtung, dass die plattenförmigen optischen Elemente in der gemeinsamen Ebene gegeneinander verdreht sind.

Bei einer weiteren Ausführungsform sind mindestens zwei im Strahlweg aufeinander folgende, insbesondere unmittelbar aufeinander folgende plattenförmige optische Elemente mit ihren in einer gemeinsamen Ebene liegenden Keilwinkeln gleichsinnig (in Bezug auf den Strahlweg des Laserstrahls) ausgerichtet. Die jeweiligen Keilspitzen, an der die Strahleintrittsfläche und die Strahlaustrittsfläche der plattenförmigen optischen Elemente aufeinander treffen, liegen in diesem Fall in der Einfallsebene des Laserstrahls in Bezug auf den Strahlweg des Laserstrahls auf derselben Seite. An den gleichsinnig ausgerichteten plattenförmigen optischen Elementen wird der Laserstrahl in der Einfallsebene jeweils auf das der Keilspitze abgewandte, breitere Ende des jeweiligen plattenförmigen optischen Elements umgelenkt. Bei mehreren gleichsinnig ausgerichteten plattenförmigen optischen Elementen addieren sich die Ablenkwinkel $\delta$ auf, unter denen der Laserstrahl gegenüber der Strahlrichtung des einfallenden Laserstrahls verdreht wird.

Bei einer Weiterbildung sind mindestens drei im Strahlweg insbesondere unmittelbar aufeinander folgende, gleichsinnig ausgerichtete plattenförmige optische Elemente in der gemeinsamen Ebene um jeweils denselben Drehwinkel gegeneinander verdreht, der bevorzugt dem Betrag eines Ablenk-Winkels beim Durchtritt des Laserstrahls durch ein jeweiliges optisches Element entspricht, d.h. dem Winkel, mit dem der Laserstrahl beim Durchtritt durch ein jeweiliges plattenförmiges optisches Element umgelenkt wird. Der Drehwinkel und der Ablenk-Winkel sind entgegengesetzt orientiert. Auf diese Weise wird sichergestellt, dass der Laserstrahl an den Strahleintrittsflächen der jeweiligen plattenförmigen optischen Elemente unter dem Brewster-Winkel auftrifft.

Insgesamt wird bei einer solchen Anordnung der Laserstrahl an einer Anzahl von N gleichsinnig ausgerichteten plattenförmigen optischen Elementen um einen Ablenk-Winkel von $N * \delta$ gegenüber der Strahlrichtung des einfallenden Laserstrahls abgelenkt, wobei sich der Ablenkwinkel $\delta$ aus der obigen Formel (1) ergibt. Bei der hier beschriebenen fächerförmigen Anordnung der plattenförmigen optischen Elemente in der Polarisatoranordnung gibt es keine parallelen Strahleintrittsflächen und Strahlaustrittsflächen in der gemeinsamen Ebene, so dass die weiter oben beschriebenen Fabry-Perot-Effekte vermieden werden können. Zwar kann der austretende Laserstrahl nach dem Durchlaufen der plattenförmigen optischen Elemente noch Interferenzstreifen aufweisen, die reflektierten Teilstrahlen weisen aber alle einen Winkel zur Strahlrichtung des ausfallenden Laserstrahls auf, so dass diese räumlich von Haupt-Strahl getrennt werden können. Die Trennung kann beispielsweise durch einen im Strahlweg nach den plattenförmigen optischen Elementen angeordneten Raumfilter, Abstreifer (Scraper), etc. erfolgen.

Bei einer weiteren Ausführungsform sind bei mindestens zwei im Strahlweg des Laserstrahls aufeinander folgenden plattenförmigen optischen Elementen die jeweiligen in einer gemeinsamen Ebene liegenden Keilwinkel entgegengesetzt orientiert, wobei die beiden plattenförmigen optischen Elemente bevorzugt um einen Drehwinkel zueinander verdreht sind, der dem Betrag eines Ablenk-Winkels beim Durchtritt des Laserstrahls durch ein jeweiliges optisches Element entspricht. Die jeweiligen Kanten, an der die Strahleintrittsfläche und die Strahlaustrittsfläche der plattenförmigen optischen Elemente aufeinander treffen, liegen in der Einfallsebene des Laserstrahls in Bezug auf den Strahlweg des Laserstrahls in diesem Fall auf gegenüberliegenden Seiten. Mit anderen Worten sind die beiden plattenförmigen optischen Elemente um ca. 180° gegeneinander verdreht angeordnet. Auch in diesem Fall trifft der Laserstrahl nach dem Durchtritt durch das erste plattenförmige optische Element auf die Strahleintrittsfläche des zweiten plattenförmigen optischen Elements unter dem Brewster-Winkel auf. Um dies zu gewährleisten, ist das zweite plattenförmige optische Element um den Drehwinkel $\delta$ relativ zum ersten plattenförmigen optischen Element gedreht, der dem negativen Ablenk-Winkel $-\delta$ entspricht. Allerdings ist der Keilwinkel zwischen der Strahleintrittsfläche und der Strahlaustrittsfläche des zweiten plattenförmigen optischen Elements entgegengesetzt orientiert, so dass der Laserstrahl das zweite plattenförmige optische Element an der Strahlaustrittsfläche parallel zum einfallenden Laserstrahl verlässt, allerdings mit einem lateralen Versatz zum einfallenden Laserstrahl. Bei dem Paar von plattenförmigen optischen Elementen sind ebenfalls keine der Strahleintritts- und der Strahlaustrittsflächen in der Ebene der jeweiligen Keilwinkel parallel zueinander ausgerichtet.

Bei einer Weiterbildung sind mindestens zwei Paare von plattenförmigen optischen Elementen mit entgegengesetzt orientiertem Keilwinkel im Strahlengang nacheinander angeordnet, wobei die Strahleintrittsflächen und die Strahlaustrittsflächen der beiden Paare von plattenförmigen optischen Elementen jeweils parallel zueinander ausgerichtet sind. Mit anderen Worten sind in diesem Fall zwei oder mehr in der jeweiligen Ebene parallel ausgerichtete Paare von plattenförmigen optischen Elementen im Strahlengang des Laserstrahls hintereinander angeordnet. Die parallele Ausrichtung der Strahleintrittsfläche des ersten plattenförmigen optischen Elements des ersten Paares und der Strahleintrittsfläche des ersten plattenförmigen optischen Elements des zweiten Paares stellt aber keine echte Fabry-Perot-Kavität dar, da zwischen diesen beiden parallelen Flächen das zweite plattenförmige optische Element des ersten Paares angeordnet ist, welches den Keilwinkel aufweist, sodass die optische Weglänge für parallel versetzte (Teil-)Strahlen in dieser Kavität keine Konstante darstellt. Die Anzahl der parallel orientierten Paare von plattenförmigen optischen Elementen mit entgegengesetzt orientiertem Keilwinkel kann praktisch beliebig vergrößert werden, ohne dass der austretende Laserstrahl einen Winkel zum einfallenden Laserstrahl aufweist, denn es nimmt lediglich der laterale Versatz hierbei zu.

Bei einer solchen parallelen Anordnung der plattenförmigen optischen Elemente weisen die an zwei parallelen Flächen reflektierten (Teil-)Strahlen aufgrund des Keils in der Kavität zwar eine unterschiedliche optische Weglänge und damit eine unterschiedliche Phase auf, die reflektierten (Teil-)Strahlen treten aber unter demselben Winkel aus der Polarisatoranordnung aus wie der (Haupt-)Strahl. Abhängig von der Dicke der plattenförmigen optischen Elemente und dem Abstand der plattenförmigen optischen Elemente zueinander sind die reflektierten (Teil-)Strahlen dennoch auch in diesem Fall räumlich separiert und können daher mittels einer geeigneten Filtereinrichtung räumlich vom (Haupt-)Strahl getrennt werden.

Bei einer weiteren Ausführungsform sind mindestens zwei Paare von plattenförmigen optischen Elementen mit entgegengesetzt orientiertem Keilwinkel im Strahlengang nacheinander angeordnet und die Strahleintrittsflächen und die Strahlaustrittsflächen der mindestens zwei Paare von plattenförmigen optischen Elementen sind spiegelsymmetrisch bezüglich einer Ebene senkrecht zum einfallenden Laserstrahl ausgerichtet. Durch die spiegelsymmetrische Ausrichtung der zwei oder mehr (identischen) Paare von plattenförmigen optischen Elementen kann der laterale Versatz, der von dem ersten Paar von plattenförmigen optischen Elementen erzeugt wird, durch den lateralen Versatz kompensiert werden, den das zweite Paar von plattenförmigen optischen Elementen erzeugt. Auf diese Weise kann bei einer identischen Anzahl von spiegelsymmetrisch angeordneten Paaren der Laserstrahl die Polarisatoranordnung ohne lateralen Versatz durchlaufen.

Bei einer weiteren Ausführungsform umfasst die Polarisatoranordnung eine Halterung zur gemeinsamen Fixierung der plattenförmigen optischen Elemente. Die (mechanische) Halterung dient zur Aufnahme der plattenförmigen optischen Elemente in einer vorgegebenen Ausrichtung und Position relativ zueinander. Die Halterung kann zu diesem Zweck beispielsweise am seitlichen Rand der plattenförmigen optischen Elemente angreifen, um diese zu fixieren.

Bei einer weiteren Ausführungsform umfasst die Polarisatoranordnung einen im Strahlweg des eintretenden Laserstrahls vor der Mehrzahl von plattenförmigen optischen Elementen angeordneten optischen Filter und/oder einen im Strahlweg des austretenden Laserstrahls nach der Mehrzahl von plattenförmigen optischen Elementen angeordneten optischen Filter zur Filterung von unter einem Winkel zur Strahlrichtung des eintretenden und/oder des austretenden Laserstrahls verlaufenden Strahlungsanteilen. Bei dem optischen Filter kann es sich beispielsweise um einen Raumfilter handeln, der eine Linse und eine Blende mit einem kleinen Blenden-Durchmesser (pinhole) aufweist. Alternativ oder zusätzlich kann auch eine herkömmliche Blende bzw. ein Scraper verwendet werden, um die unerwünschten Strahlungsanteile auszufiltern. Bei den Strahlungsanteilen, die unter einem Winkel zum ausfallenden Laserstrahl verlaufen, handelt es sich typischerweise um Teil-Strahlen bzw. um Strahlungsanteile des einfallenden Laserstrahls, die an den plattenförmigen optischen Elementen (mehrmals) reflektiert wurden. Bei den Strahlungsanteilen, die unter einem Winkel zum einfallenden Laserstrahl verlaufen, handelt es sich typischerweise um Strahlungsanteile, die an den plattenförmigen optischen Elementen zurück reflektiert wurden sowie um ggf. von einem Werkstück zurück reflektierte Strahlungsanteile (s.u.).

Die weiter oben beschriebene Polarisatoranordnung kann insbesondere auch als optische Diode bzw. als optischer Isolator verwendet werden, die einen p-polarisierten Laserstrahl, der die Polarisatoreinrichtung vorwärts durchläuft, im Wesentlichen ungefiltert hindurchlässt, aber einen s-polarisierten Laserstrahl, der die Polarisatoranordnung rückwärts durchläuft, möglichst vollständig unterdrückt. Der s-polarisierte Laserstrahl bzw. generell s-polarisierte Laserstrahlung wird an einem jeweiligen plattenförmigen optischen Element, das unter dem Brewster-Winkel ausgerichtet ist, zumindest teilweise reflektiert und kann beispielsweise in einer Strahlfalle aufgefangen werden. Die Strahlfalle kann in die Halterung bzw. in ein Gehäuse für die plattenförmigen optischen Elemente integriert sein, diese kann aber auch außerhalb der Halterung angeordnet sein.

Der in die als optischer Isolator dienende Polarisatoranordnung eintretende Laserstrahl kann bereits linear polarisiert sein, und zwar derart, dass dieser beim Durchtritt durch die Polarisatoranordnung nicht bzw. nur geringfügig abgeschwächt wird. Typischerweise ist ein solcher Laserstrahl p-polarisiert bezüglich der Einfallsebene auf die Strahleintrittsfläche des ersten plattenförmigen optischen Elements im Strahlengang. Der Durchtritt eines bereits linear polarisierten Laserstrahls durch die Polarisatoranordnung, der in der Polarisatoranordnung seine lineare Polarisation beibehält, kann sinnvoll sein, wenn dieser Laserstrahl an einem oder mehreren Objekten (z.B. einem Target-Material), die nach der Polarisatoranordnung angeordnet sind, zur Polarisatoranordnung zurück reflektiert wird (s.u.).

Die Erfindung betrifft auch eine EUV-Strahlungserzeugungsvorrichtung, umfassend: eine Treiberlaseranordnung zur Erzeugung eines Laserstrahls, eine Vakuum-Kammer, in der ein Target-Material anordenbar ist, eine Strahlführungseinrichtung zur Führung des Laserstrahls von der Treiberlasereinrichtung zum Target-Material, sowie eine Polarisatoranordnung wie weiter oben beschrieben, die zur (linearen) Polarisation des Laserstrahls und/oder als optischer Isolator dient. Die Strahlführungseinrichtung führt den Laserstrahl zu einem fokussierenden Element bzw. zu einer Fokussieranordnung, welche dazu dient, den Laserstrahl in einem Zielbereich zu fokussieren. In dem Zielbereich wird ein Target-Material (z.B. Zinn) bereitgestellt, welches bei der Bestrahlung mit dem Laserstrahl in einen Plasma-Zustand übergeht und hierbei EUV-Strahlung emittiert.

Bei einer Ausführungsform weist die EUV-Strahlungserzeugungsvorrichtung eine Phasenschiebe-Einrichtung auf, die zwischen der Polarisatoranordnung und dem Target-Material angeordnet ist, wobei die Phasenschiebe-Einrichtung zur Bildung eines am Target-Material reflektierten Laserstrahls ausgebildet ist, dessen Polarisationsrichtung senkrecht zur Polarisationsrichtung des zum Target-Material propagierenden Laserstrahls ausgerichtet ist. Die Polarisationsrichtung des Laserstrahls wird in diesem Fall an der weiteren Phasenschiebe-Einrichtung insgesamt um 90° gedreht, so dass die Polarisationsrichtung des erneut auf die Polarisatoranordnung treffenden, vom Target-Material zurück reflektierten Laserstrahls senkrecht zur Polarisationsrichtung des zum Target-Material propagierenden Laserstrahls ausgerichtet ist.

Bei der Phasenschiebe-Einrichtung kann es sich beispielsweise um einen phasenschiebenden Spiegel handeln, der beim Durchlauf des Laserstrahls in Vorwärtsrichtung sowie beim Durchlauf des Laserstrahls in Rückwärtsrichtung jeweils einen Gangunterschied von $\lambda/4$ erzeugt, wodurch insgesamt ein Gangunterschied von $\lambda/2$ und damit eine Drehung der Polarisationsrichtung um 90° entsteht. Durch die Drehung der Polarisationsrichtung wird der zurück reflektierte Laserstrahl von der Polarisatoranordnung umgelenkt, genauer gesagt an den jeweiligen plattenförmigen optischen Elementen reflektiert, so dass dieser nicht mehr zur Strahlquelle zurück gelangen kann und daher die Polarisatoranordnung als optischer Isolator wirkt. Die EUV-Strahlungserzeugungsvorrichtung kann zusätzlich eine Strahlfalle aufweisen, die zum Auffangen von an den plattenförmigen optischen Elementen der Polarisatoranordnung umgelenkten bzw. reflektierten Strahlungsanteile des an dem Target-Material zur Polarisatoranordnung zurück reflektierten Laserstrahls dient. Die Polarisatoranordnung kann in diesem Fall als optischer Isolator dienen, der ein Eintreten des vom Target-Material zurück reflektierten Laserstrahls in die Treiberlasereinrichtung verhindert.

Die Treiberlaseranordnung der EUV-Strahlungserzeugungsvorrichtung weist typischerweise eine oder ggf. mehrere Strahlquellen zur Erzeugung eines oder ggf. mehrerer (gepulster) Laserstrahlen bzw. von so genannten Seed-Pulsen auf, die in einem, typischerweise in mehreren optischen Verstärkern einer Verstärkeranordnung auf hohe Laserleistungen von mehreren kW, ggf. von 10 kW oder darüber verstärkt werden. Die bzw. eine Polarisatoranordnung kann in der Treiberlaseranordnung oder in der Strahlführungseinrichtung angeordnet sein, um ggf. den von der Strahlquelle erzeugten Laserstrahl zu polarisieren und/oder den am Target-Material zurück reflektierten Laserstrahl zu filtern bzw. umzulenken. Die Polarisatoranordnung kann insbesondere auch im Strahlweg vor der Verstärkeranordnung eingesetzt werden, da die dort verwendete Laserleistung zwar bereits recht groß, aber typischerweise nicht groß genug ist, um die plattenförmigen optischen Elemente der Polarisatoranordnung zu schädigen. Es versteht sich, dass die hier beschriebene Polarisatoranordnung auch bei anderen Anwendungen, beispielsweise in der Materialbearbeitung, z.B. bei Laserbearbeitungsmaschinen, eingesetzt werden kann. Auch kann an Stelle eines Laserstrahls ein anderer (polychromatischer) Lichtstrahl in der Polarisatoranordnung polarisiert werden, sofern dessen Bandbreite sich nicht über einen zu großen Wellenlängenbereich erstreckt.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:

Fig. 1    eine schematische Darstellung eines Beispiels einer Polarisatoranordnung mit sechs fächerförmig angeordneten plattenförmigen optischen Elementen, die jeweils denselben Keilwinkel aufweisen und deren Strahleintrittsflächen unter dem Brewster-Winkel zu einem einfallenden Laserstrahl ausgerichtet sind,

Fig. 2    eine schematische Darstellung einer Polarisatoranordnung analog zu Fig.1, die sechs Paare von plattenförmigen optischen Elementen aufweist, deren Keilwinkel jeweils entgegengesetzt orientiert sind,

Fig. 3a,b    eine schematische Darstellung einer Polarisatoranordnung analog zu Fig. 1 in einer Einfallsebene des Laserstrahls auf das erste plattenförmige optische Element sowie eine schematische Darstellung der ersten beiden optischen Elemente in einer senkrecht zur Einfallsebene verlaufenden Ebene,

Fig. 4    eine schematische Darstellung der einfallswinkelabhängigen Reflektivität einer Strahleintrittsfläche eines plattenförmigen optischen Elements für einen p-polarisierten Strahlungsanteil, sowie

Fig. 5    eine schematische Darstellung einer EUV-Strahlungserzeugungsvorrichtung mit einer Polarisatoranordnung gemäß Fig. 1 oder Fig. 2, die als optischer Isolator verwendet wird.

In der folgenden Beschreibung der Zeichnungen werden für gleiche bzw. funktionsgleiche Bauteile identische Bezugszeichen verwendet.

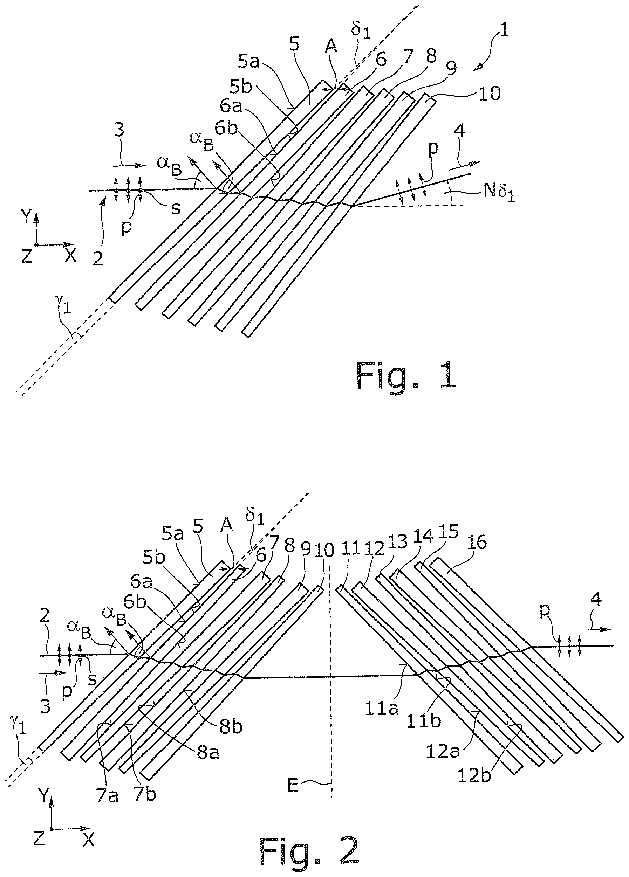

In **Fig. 1** ist eine Polarisatoranordnung 1 für einen Laserstrahl 2 gezeigt, welche sechs plattenförmige transmittierende optische Elemente 5 bis 10 in Form von (im Wesentlichen) planparallelen Platten aufweist. Der Laserstrahl 2 wird im gezeigten Beispiel von einer $CO_2$-Laserquelle erzeugt und weist eine Wellenlänge $\lambda$ von ca. 10,59 $\mu$m auf.

Bei dem Material, aus dem die plattenförmigen optischen Elemente 5 bis 10 gebildet sind, handelt es sich im vorliegenden Beispiel um Zinkselenid (ZnSe), welches für die Wellenlänge λ des Laserstrahls 2 transparent ist bzw. für diese Wellenlänge eine geringe Absorption aufweist, so dass sich in diesem Material auch bei der Verwendung von hohen Strahlintensitäten bzw. Laserleistungen nur eine schwache thermische Linse ausbildet. Es versteht sich, dass der Laserstrahl 2 auch eine andere Wellenlänge λ aufweisen kann, beispielsweise eine Wellenlänge λ von ca. 1 μm oder weniger. In diesem Fall kann es sich bei dem Material der plattenförmigen optischen Elemente 5 bis 10 beispielsweise um Quarzglas oder um ein anderes Material mit einer möglichst geringen Absorption handeln.

Die plattenförmigen optischen Elemente 5, 6, ... weisen jeweils eine plane Strahleintrittsfläche 5a, 6a, ... auf, durch die der im gezeigten Beispiel unpolarisierte Laserstrahl 2 in das Material der plattenförmigen optischen Elemente 5, 6, ... eintritt. Die plattenförmigen optischen Elemente 5, 6, ... sind in Bezug auf den Laserstrahl 2, genauer gesagt in Bezug auf eine in X-Richtung verlaufende Strahlrichtung 3 des einfallenden Laserstrahls 2 in einer Einfallsebene X, Y des Laserstrahls 2 derart gegeneinander verdreht, dass der Laserstrahl 2 auf eine jeweilige Strahleintrittsfläche 5a, 6a, ... unter dem Brewster-Winkel $\alpha_B$ zur jeweiligen Flächennormalen auftrifft.

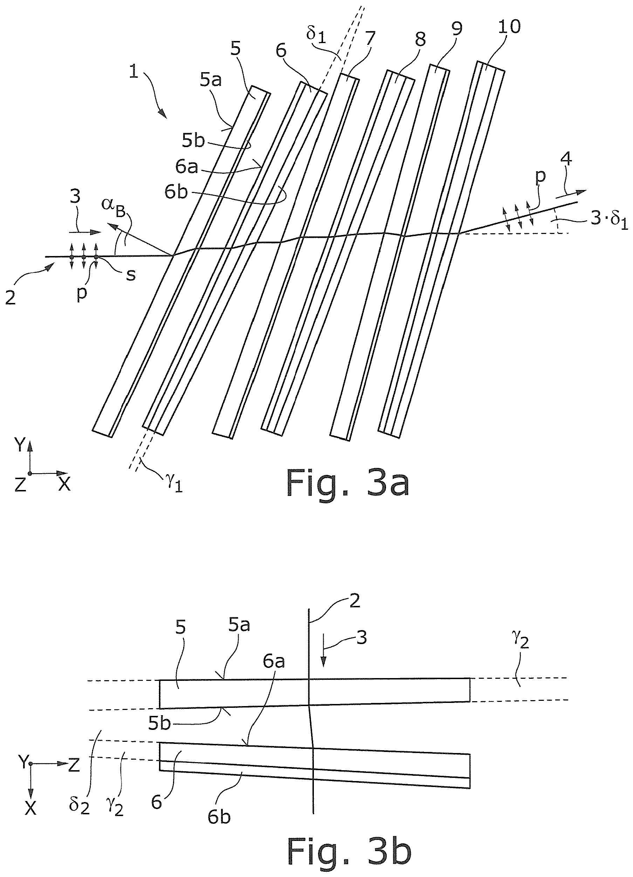

Im gezeigten Beispiel, d.h. bei einem Material mit einem Brechungsindex $n_2$ von 2,4027 in Luft ($n_1$ = 1,0) liegt der Brewster-Winkel $\alpha_B$ = arctan($n_2$ / $n_1$) bei ca. 67,4032°. Beim Brewster-Winkel $\alpha_B$ von ca. 67,4° wird der in Fig. 1 durch Doppelpfeile angedeutete p-polarisierte Anteil des Laserstrahls 2 an der jeweiligen Strahleintrittsfläche 5a, 6a, ... praktisch nicht reflektiert, wie anhand von **Fig. 3** gut zu erkennen ist, welche die Reflektivität $R_P$ für den p-polarisierten Strahlungsanteil an einer jeweiligen (unbeschichteten) Strahleintrittsfläche 5a, 6a, ... in Abhängigkeit vom Einfallswinkel α zeigt. Wie in Fig. 3 ebenfalls zu erkennen ist, ist die Reflektivität $R_P$ für den p-polarisierten Strahlungsanteil des Laserstrahls 2 auch bei geringfügigen Abweichungen vom Brewster-Winkel $\alpha_B$ von z.B. ca. 0,2° noch vergleichsweise klein und liegt bei weniger als $2,0 \times 10^{-5}$. Idealer Weise sollte der Laserstrahl 2 exakt unter dem Brewster-Winkel $\alpha_B$ auf die Strahleintrittsfläche 5a auftreffen, um den p-polarisierten Strahlungsanteil vollständig zu transmittieren. Wie weiter oben beschrieben wurde, wird im Sinne dieser Anmeldung unter dem Auftreffen unter dem Brewster-Winkel $\alpha_B$ auch eine Abweichung vom Brewster-Winkel $\alpha_B$ in der Größenordnung von ca. +/- 0,5° verstanden. Durch geringfügige Abweichungen vom Brewster-Winkel $\alpha_B$ werden die Freiheitsgrade bei der Anordnung der plattenförmigen optischen Elemente im Raum erhöht, was insbesondere günstig ist, wenn die plattenförmigen optischen Elemente windschief im Raum angeordnet werden sollen.

Im Gegensatz zum p-polarisierten Strahlungsanteil wird der s-polarisierte Strahlungsanteil des Laserstrahls 2 (in Fig. 1 durch Punkte angedeutet) teilweise an der Strahleintrittsfläche 5a reflektiert, so dass der s-polarisierte Strahlungsanteil des Laserstrahls 2 am Austritt des plattenförmigen optischen Elements 5 gegenüber dem p-polarisierten Strahlungsanteil reduziert ist. Der (in Fig. 3 nicht dargestellte) reflektierte s-polarisierte Strahlungsanteil kann beispielsweise in der Größenordnung von ca. 50 % liegen. Der austrittsseitige Laserstrahl 2, welcher die sechs plattenförmigen optischen Elemente 5 bis 10 durchlaufen hat, weist daher (im Wesentlichen) nur noch den p-polarisierten Strahlungsanteil auf und ist somit linear (p-)polarisiert.

Die im gezeigten Beispiel plane Strahleintrittsfläche 5a des ersten plattenförmigen optischen Elements 5 ist in Bezug auf die plane Strahlaustrittsfläche 5b in der Einfallsebene XY des Laserstrahls 2 auf das erste plattenförmige optische Element 6 unter einem Keilwinkel $Y_1$ angeordnet, der vergleichsweise klein ist und beispielsweise bei weniger als 1,0°, bei weniger als 0,5°, ... liegen kann. Im gezeigten Beispiel gilt für den Keilwinkel $Y_1$ = 0,1°, d.h. der Keilwinkel $Y_1$ beträgt ca. 6 Winkelminuten. Im gezeigten Beispiel sind die Keilwinkel $\gamma_1$ aller sechs plattenförmiger optischer Elemente 5 bis 10 gleich groß, dies ist aber nicht zwingend erforderlich. Wie in Fig. 1 ebenfalls zu erkennen ist, ist der Keilwinkel $\gamma_1$ so klein, dass die Keilspitze, an welcher die Strahleintrittsfläche 5a und die Strahlaustrittsfläche 5b aufeinander treffen, sich außerhalb eines jeweiligen plattenförmigen optischen Elements 5 bis 10 befindet.

Aufgrund des Keilwinkels $\gamma$ ist eine jeweilige Strahleintrittsfläche 5a, 6a, ... nicht parallel zu einer jeweiligen Strahlaustrittsfläche 5b, 6b, ... ausgerichtet. Daher tritt der Laserstrahl 2 nicht parallel zur Strahlrichtung 3 des einfallenden Laserstrahls 2 aus dem ersten plattenförmigen optischen Element 5 aus. Vielmehr tritt der Laserstrahl 2 an der Strahlaustrittsfläche 5b des plattenförmigen optischen Elements 5 unter einem in der Einfallsebene XY liegenden Ablenk-Winkel $\delta_1$ zur Strahlrichtung 3 des einfallenden Laserstrahls aus. Die Beziehung zwischen dem Keilwinkel $\gamma_1$ und dem Ablenk-Winkel $\delta_1$ ist durch die weiter oben angegebene Formel (1) gegeben, aus der sich im gezeigten Beispiel ergibt: $\delta_1$ = 0,484°. Die Umlenkung des Laserstrahls 2 unter dem Ablenk-Winkel $\delta_1$ erfolgt von der Strahlrichtung 3 des einfallenden Laserstrahls (entsprechend der X-Richtung eines XYZ-Koordinatensystems) ausgehend in Richtung auf das dickere Ende der jeweiligen plattenförmigen optischen Elemente 5, 6, ....

Um zu gewährleisten, dass auch das zweite plattenförmige optische Element 6 mit seiner Strahleintrittsfläche 6a unter dem Brewster-Winkel $\alpha_B$ zu dem aus dem ersten plattenförmigen optischen Element 5 austretenden Laserstrahl 2 ausgerichtet ist, ist es erforderlich, die Ablenkung um den Ablenk-Winkel $\delta_1$ zu kompensieren. Zu diesem Zweck wird das zweite plattenförmige optische Element 6 in der Einfallsebene X, Y des Laserstrahls 2 um einen Drehwinkel $\delta_1$ (genauer gesagt - $\delta_1$ bzw. -0,484°) relativ zu dem ersten plattenförmigen optischen Element 5 verdreht, so dass die dickeren Enden der beiden plattenförmigen optischen Elemente 5, 6 einen geringeren (minimalen) Abstand A (gemessen in Strahlrichtung 3 des einfallenden Laserstrahls 2) zueinander aufweisen als deren dünnere Enden. Das dritte bis sechste plattenförmige optische Element 7 bis 10 werden entsprechend, d.h. um denselben Drehwinkel $\delta_1$, verdreht, so dass sich insgesamt die in Fig. 1 dargestellte fächerförmige Anordnung der plattenförmigen optischen Elemente 5 bis 10 ergibt.

Bei der in Fig. 1 gezeigten fächerförmigen Anordnung der plattenförmigen optischen Elemente 5 bis 10 summieren sich die jeweiligen Ablenk-Winkel $\delta_1$. Daher gilt für den Ablenk-Winkel, unter dem der ausfallende Laserstrahl 2 nach den plattenförmigen optischen Elementen 5 bis 10 verläuft, N x $\delta_1$, wobei N die Anzahl der plattenförmigen optischen Elemente 5 bis 10 bezeichnet. Im gezeigten Beispiel liegt der Winkel zwischen der Strahlrichtung 3 des einfallenden Laserstrahls 2 und der Strahlrichtung 4 des ausfallenden Laserstrahls 2 bei insgesamt $6 \times \delta_1 = 2,904°$.

Bei dem in Fig. 1 gezeigten Beispiel verlaufen die planen Strahleintrittsflächen 5a, 6a, ... und die planen Strahlaustrittsflächen 5b, 6b, ... der plattenförmigen optischen Elemente 5, 6, ... jeweils senkrecht zur Einfallsebene des Laserstrahls 2, bei der es sich im gezeigten Beispiel um die XY-Ebene handelt. Entsprechend liegen die Keilwinkel $\gamma_1$ der jeweiligen plattenförmigen optischen Elemente 5 bis 10 ebenfalls in der Einfallsebene des Laserstrahls 2. Aufgrund der fächerförmigen Anordnung der plattenförmigen optischen Elemente 5, 6, ... sind die Strahleintrittsflächen 5a, 6a, ... und die Strahlaustrittsflächen 5b, 6b, ... bei allen plattenförmigen optischen Elementen 5, 6, ... unter einem von Null verschiedenen Winkel zueinander ausgerichtet. Durch die nicht parallele Ausrichtung der plattenförmigen optischen Elemente 5 bis 10 können Fabry-Perot-Effekte vermieden werden, so dass die plattenförmigen optischen Elemente 5 bis 10 in einem geringen Abstand A von wenigen Millimetern, z.B. von weniger als 5 mm voneinander angeordnet werden können. Bei dem in Fig. 1 gezeigten Beispiel gilt für den minimalen Abstand A = 2 mm.

Bei dem in Fig. 1 gezeigten Beispiel sind die plattenförmigen optischen Elemente 5 bis 10 mit ihren Keilwinkeln $\gamma_1$ jeweils gleichsinnig ausgerichtet, d.h. deren (nicht bildlich dargestellte) Keilspitze befindet sich jeweils auf derselben Seite des Strahlwegs des Laserstrahls 2 (in Fig. 1 unten). Aufgrund der gleichsinnigen Ausrichtung der plattenförmigen optischen Elemente 5 bis 10 kommt es zu der weiter oben beschriebenen Winkel-Abweichung zwischen der Strahlrichtung 3 des einfallenden Laserstrahls 2 und der Strahlrichtung 4 des ausfallenden Laserstrahls 2. **Fig. 2** zeigt eine Polarisatoranordnung 1, die sich von der in Fig. 1 gezeigten Polarisatoranordnung 1 zunächst dadurch unterscheidet, dass diese an Stelle von sechs plattenförmigen optischen Elementen 5 bis 10 zwölf plattenförmige optische Elemente 5 bis 16 aufweist, die spiegelsymmetrisch zu einer Symmetrieebene E angeordnet und ausgerichtet sind, die im gezeigten Beispiel senkrecht zur Strahlrichtung 3 des einfallenden Laserstrahls 2 verläuft (YZ-Ebene). Das siebte, achte, ... plattenförmige optische Element 11, 12, ... genauer gesagt deren Strahleintrittsflächen 11a, 12a, ... und deren Strahlaustrittsflächen 11b, 12b, ... sind bezüglich der Symmetrieebene E spiegelsymmetrisch zu den Strahleintrittsflächen 5a, 6a, ... bzw. zu den Strahlaustrittsflächen 5b, 6b, ... des ersten, zweiten, ... plattenförmigen optischen Elements 5, 6, .. ausgerichtet.

Wie weiter unten näher beschrieben wird, erzeugen das erste bis sechste plattenförmige optische Element 5 bis 10 einen lateralen Versatz des Laserstrahls 2 in der Einfallsebene (XY-Ebene), der durch das siebte bis zwölfte plattenförmige optische Element 11 bis 16 kompensiert wird, so dass der ausfallende Laserstrahl 2 parallel und kollinear zum einfallenden Laserstrahl 2 verläuft.

Das erste bis zwölfte plattenförmige optische Element 5 bis 16 sind baugleich zu den in Zusammenhang mit Fig. 1 beschriebenen plattenförmigen optischen Elementen 5 bis 10 ausgebildet, d.h. diese weisen ebenfalls jeweils einen in der Einfallsebene XY liegenden Keilwinkel $\gamma_1$ von ca. 0,1° auf. Die Polarisatoranordnung 1 von Fig. 2 unterscheidet sich durch die Ausrichtung bzw. die Anordnung des zweiten, vierten und sechsten plattenförmigen optischen Elements 6, 8, 10 von der in Fig. 1 gezeigten Polarisatoranordnung 1: Die Strahleintrittsfläche 6a des zweiten plattenförmigen optischen Elements 6 ist zwar wie in Fig. 1 unter einem Drehwinkel $\delta_1$ zur Strahleintrittsfläche 5a des ersten plattenförmigen optischen Elements 5 gedreht, um die Brewster-Bedingung zu erfüllen. Im Gegensatz zu Fig. 1 ist das zweite plattenförmige optische Element 6 aber bezüglich des Keilwinkels $\gamma_1$ entgegengesetzt zum ersten plattenförmigen optischen Element 5 orientiert, d.h. die Keilwinkel $\gamma_1$ und somit die entsprechenden Keilspitzen des ersten und des zweiten plattenförmigen optischen Elements 5, 6 sind in der Einfallsebene des Laserstrahls 2 auf gegenüber liegenden Seiten des Strahlwegs des Laserstrahls 2 angeordnet. An dem zweiten plattenförmigen optischen Element 6 wird der Laserstrahl 2 daher um einen Ablenk-Winkel $\delta_1$ umgelenkt, dessen Betrag dem Ablenk-Winkel $\delta_1$ am ersten plattenförmigen optischen Element 5 entspricht, der aber gegenläufig orientiert ist, d.h. ein in Bezug auf den Ablenk-Winkel $\delta_1$ am ersten plattenförmigen optischen Element 5 entgegen gesetztes Vorzeichen aufweist. Nach dem Durchlauf durch das erste und das zweite plattenförmige optische Element 5, 6 ist der Laserstrahl 2 daher immer noch parallel zur Strahlrichtung 3 des einfallenden Laserstrahls 2 ausgerichtet und weist lediglich einen lateralen Versatz auf.

Das Paar bestehend aus dem dritten und vierten plattenförmigen optischen Element 7, 8 ist parallel zu dem Paar bestehend aus dem ersten und dem zweiten plattenförmigen optischen Element 5, 6 ausgerichtet, d.h. die Strahleintrittsflächen 5a, 6a und die Strahlaustrittsflächen 5b, 6b des ersten und zweiten plattenförmigen optischen Elements 5, 6 sind parallel zu den Strahleintrittsflächen 7a, 8a und den Strahlaustrittsflächen 7b, 8b des dritten und vierten plattenförmigen optischen Elements 7, 8 ausgerichtet. Entsprechendes gilt für das fünfte und sechste plattenförmige optische Element 9, 10. Das keilförmige zweite optische Element 6, das zwischen den beiden parallelen Strahleintrittsflächen 5a, 7a des ersten und dritten plattenförmigen optischen Elements 5, 7 angeordnet ist, verhindert, dass die optische Weglänge für parallel versetzte (reflektierte) Teil-Strahlen konstant ist. Trotz der parallelen Ausrichtung der Strahleintrittsfläche 5a des ersten plattenförmigen optischen Elements 5 und der Strahleintrittsfläche 7a des dritten plattenförmigen optischen Elements 7 treten daher nur geringfügige Fabry-Perot-Effekte auf. Entsprechendes gilt für alle plattenförmigen optischen Elemente 5 bis 16.

Die in Fig. 1 und in Fig. 2 beschriebene Polarisatoranordnung 1 kann eine größere oder kleinere Anzahl von plattenförmigen optischen Elementen aufweisen. Aufgrund der Keilform der plattenförmigen optischen Elemente 5 bis 16 können diese in einem kleinen Abstand A zueinander angeordnet werden, ohne dass es hierbei zu signifikanten Interferenz-Effekten des austretenden Laserstrahls 2 kommt, d.h. in einer gewissen Abstand zu der Polarisatoranordnung 1 überlappen die unter einem Winkel zur Strahlrichtung 3 des austretenden Laserstrahls 2 verlaufenden Strahlungsanteile nicht mehr mit dem Hauptstrahl. Auf diese Weise kann eine nahezu beliebige Anzahl von plattenförmigen optischen Elementen auf einem kleinen Bauraum untergebracht werden, so dass der Extinktionskoeffizient für den von der Polarisatoranordnung 1 gefilterten s-polarisierten Strahlungsanteil durch eine nahezu beliebige Anzahl von plattenförmigen optischen Elementen nahezu beliebig groß gemacht werden kann.

Die in Fig. 1 und in Fig. 2 dargestellten Anordnungen der plattenförmigen optischen Elemente 5 bis 10 bzw. 5 bis 16 können auch kombiniert werden, d.h. die Polarisatoranordnung 1 von Fig. 1 kann auch eines oder mehrere Paare von bezüglich ihres Keilwinkels $\gamma_1$ gegenläufig ausgerichteten plattenförmigen optischen Elementen aufweisen. Entsprechend können auch in der Polarisatoranordnung 1 von Fig. 2 mehrere im Strahlweg des Laserstrahls 2 aufeinander folgende plattenförmige optische Elemente angeordnet werden, deren Keilwinkel $\gamma_1$ gleichsinnig ausgerichtet sind.

**Fig. 3a,b** zeigen eine Polarisatoranordnung 1, die sich von der in Fig. 2 gezeigten Polarisatoranordnung 1 im Wesentlichen dadurch unterscheidet, dass die plattenförmigen optischen Elemente 5 bis 10, die wie in Fig. 2 in Paaren 5, 6; 7, 8; 9, 10 angeordnet sind, bezüglich eines (zweiten) Keilwinkels $\gamma_2$ (hier: $\gamma_2 = 0{,}2°$) gegenläufig ausgerichtet sind, wobei der zweite Keilwinkel $\gamma_2$ in einer Ebene XZ (vgl. Fig. 3b) senkrecht zur Einfallsebene XY und liegt. Wie in Fig. 3b zu erkennen ist, sind das erste und das zweite plattenförmige optische Element 5, 6 in der XZ-Ebene senkrecht zur Einfallsebene XY unter einem (zweiten) Drehwinkel $\delta_2$ ausgerichtet, der wie bei dem in Fig. 2 gezeigten Ausführungsbeispiel dem Betrag des Ablenk-Winkels $\delta_2$ beim Durchtritt des Laserstrahls 2 durch das erste bzw. durch das zweite optische Element 5, 6 entspricht. Der Ablenk-Winkel $\delta_2$ ergibt sich aufgrund des vergleichsweise kleinen Einfallswinkels $\alpha$ von nahezu 0° in der XZ-Ebene aus der vereinfachten Formel (1) (mit $\alpha = 0°$) zu $\delta_2 = (n - 1)\,\gamma_2$, d.h. im vorliegenden Beispiel zu $\delta_2 = 0{,}28054$. Der Laserstrahl 2 trifft daher in der YZ-Ebene senkrecht auf die Strahleintrittsfläche 6a des zweiten plattenförmigen optischen Elements 6 und wird von diesem wieder parallel zur Einfallsrichtung 3 ausgerichtet, d.h. der Laserstrahl 2 verläuft nach dem Durchtritt durch das erste und das zweite optische Element 5, 6 parallel zur Einfallsrichtung 3, aber lateral versetzt zur Einfallsebene XY.

Bei der in Fig. 3a,b dargestellten Polarisatoranordnung 1 weist das zweite optische Element 6 zusätzlich einen (ersten) Keilwinkel $\gamma_1$ in der Einfallsebene XY auf, während das erste optische Element 5 lediglich den in der XZ-Ebene liegenden (zweiten) Keilwinkel $\gamma_2$ aufweist. Durch den ersten Keilwinkel $\gamma_1$ (hier: $\gamma_1 = 0{,}1°$) wird der Laserstrahl 1 wie weiter oben in Zusammenhang mit Fig. 1 beschrieben um einen Ablenk-Winkel $\delta_1$ von 0,484° umgelenkt. Um zu gewährleisten, dass auch das dritte plattenförmige optische Element 7 mit seiner Strahleintrittsfläche unter dem Brewster-Winkel $\alpha_B$ zu dem aus dem zweiten plattenförmigen optischen Element 5 austretenden Laserstrahl 2 ausgerichtet ist, ist es erforderlich, die Ablenkung um den Ablenk-Winkel $\delta_1$ zu kompensieren. Zu diesem Zweck wird das zweite Paar von plattenförmigen optischen Elementen 7, 8 in der Einfallsebene X, Y des Laserstrahls 2 um den Drehwinkel $\delta_1$ (genauer gesagt - $\delta_1$ bzw. -0,484°) in der Einfallsebene XY relativ zur Strahlaustrittsfläche 6b des zweiten plattenförmigen optischen Elements 6 verdreht. Das dritte Paar von plattenförmigen optischen Elementen 9, 10 werden entsprechend, d.h. um denselben Drehwinkel $\delta_1$, verdreht, so dass sich insgesamt die in Fig. 3a dargestellte fächerförmige Anordnung der plattenförmigen optischen Elemente 5 bis 10 in der Einfallsebene XY ergibt. Insgesamt ergibt sich bei der in Fig. 3a,b gezeigten Polarisatoranordnung 1 in der Einfallsebene XY ein Winkel zwischen der Strahlrichtung 3 des einfallenden Laserstrahls 2 und der Strahlrichtung 4 des ausfallenden Laserstrahls 2 von $3 \times \delta_1 = 1{,}452°$.

Durch den (ersten) Keilwinkel $\gamma_1$ in der Einfallsebene XY wird verhindert, dass die Strahlaustrittsfläche 5b des ersten plattenförmigen optischen Elements 5 und die Strahleintrittsfläche 6a des zweiten plattenförmigen optischen Elements 6 parallel zueinander ausgerichtet sind. Gleiches gilt für die beiden weiteren Paare von plattenförmigen optischen Elementen 7, 8; 9, 10. Bei der in Fig. 3a,b gezeigten Polarisatoranordnung 1 sind somit die Strahleintrittsflächen 5a, 6a, ... und die Strahlaustrittsflächen 5b, 6b, ... von jeweils zwei im Strahlweg aufeinander folgenden plattenförmigen optischen Elementen 5 bis 10 nicht parallel zueinander ausgerichtet.

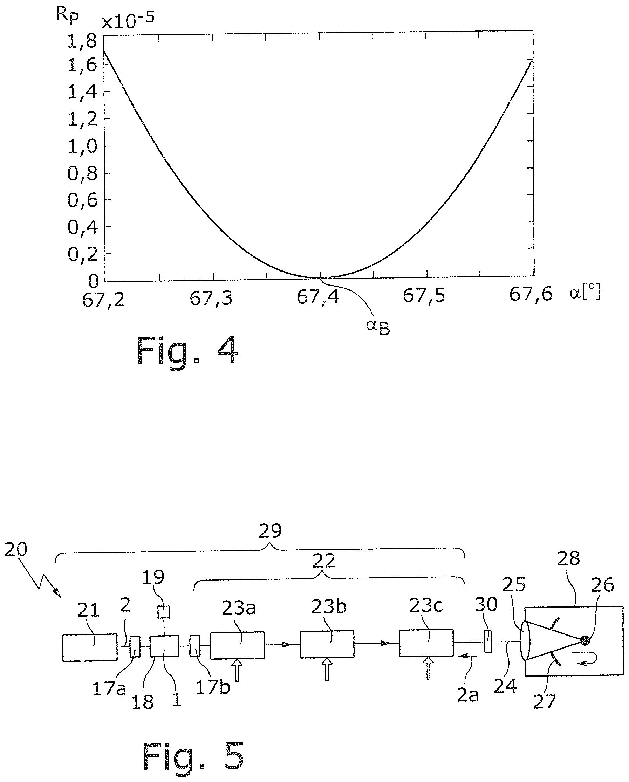

Anders als dies in Fig. 1, in Fig. 2 sowie in Fig. 3a,b beschrieben ist, kann an Stelle eines unpolarisierten Laserstrahls 2 ein p-polarisierter Laserstrahl 2 in die Polarisatoranordnung 1 eingestrahlt werden, welcher diese im Wesentlichen ohne Abschwächung verlässt. Die Polarisatoranordnung 1 kann in diesem Fall als optischer Isolator (bzw. als optische Diode) verwendet werden, um den Durchtritt eines rückreflektierten Laserstrahls 2a, dessen Polarisationsrichtung gegenüber dem einfallenden Laserstrahl um 90° gedreht ist (d.h. einen s-polarisierten Laserstrahl 2a) durch die Polarisatoranordnung 1 zu verhindern. Nachfolgend wird eine Verwendung der Polarisatoranordnung 1 als optischer Isolator in Zusammenhang mit einer in **Fig. 4** stark schematisch dargestellten EUV-Strahlungserzeugungsvorrichtung 20 beschrieben.

Die EUV-Strahlungserzeugungsvorrichtung 20 umfasst eine Strahlquelle 21, eine Verstärkeranordnung 22 mit z.B. drei optischen Verstärkern bzw. Verstärkerstufen 23a, 23b, 23c, eine nicht näher dargestellte Strahlführungseinrichtung 24 sowie eine Fokussiereinrichtung 25. Die Fokussiereinrichtung 25 dient dazu, den von der Strahlquelle 21 erzeugten und von der Verstärkeranordnung 22 verstärkten Laserstrahl 2 an einem Zielbereich in einer Vakuum-Kammer 28 zu fokussieren, in dem ein Target-Material 26 eingebracht ist. Das Target-Material 26 geht bei der Bestrahlung mit dem Laserstrahl 2 in einen Plasma-Zustand über und emittiert hierbei EUV-Strahlung, die mittels eines Kollektorspiegels 27 fokussiert wird. Bei dem in Fig. 4 gezeigten Beispiel weist der Kollektorspiegel 27 eine Öffnung zum Durchtritt des Laserstrahls 2 auf. Die Strahlquelle 21 weist im gezeigten Beispiel zwei $CO_2$-Laser auf, um einen Vor-Puls und einen Haupt-Puls zu erzeugen, die gemeinsam in der Verstärkeranordnung 22 verstärkt und auf das Target-Material 26 fokussiert werden. Die Strahlquelle 21 bildet gemeinsam mit der Verstärkeranordnung 22 eine Treiberlaseranordnung 29 der EUV-Strahlungserzeugungsvorrichtung 20.

Bei dem in Fig. 4 gezeigten Beispiel ist die Polarisatoranordnung 1 zwischen der Strahlquelle 21 und der Verstärkeranordnung 22 angeordnet und dient dazu, den von der Strahlquelle 21 erzeugten gepulsten Laserstrahl 2, der typischerweise bereits linear polarisiert ist, möglichst verlustfrei von der Treiberlaseranordnung 29 zum Target-Material 26 zu transmittieren und den an dem Target-Material 26 zurück reflektierten, in entgegen gesetzter Richtung propagierenden Laserstrahl 2a zu filtern bzw. umzulenken, so dass dieser nicht mehr zur Strahlquelle 21 bzw. zu optischen Elementen im Strahlweg vor der Polarisatoranordnung 1 gelangen kann.

Um den an dem Target-Material 26 zurück reflektierten, erneut auf die Polarisatoranordnung 1 auftreffenden Laserstrahl 2a zu filtern bzw. umzulenken, wird dessen Polarisationsrichtung gegenüber dem in Vorwärtsrichtung aus der Polarisatoranordnung 1 austretenden Laserstrahl 2 um 90° gedreht. Zur Drehung der Polarisationsrichtung des Laserstrahls 2 um 90° ist zwischen der Polarisatoranordnung 1 und dem Target-Material 26 eine Phasenschiebe-Einrichtung 30 angeordnet. Bei der Phasenschiebe-Einrichtung 30 kann es sich beispielsweise um einen phasenschiebenden Spiegel handeln, der beim Durchlauf des in Richtung auf das Target-Material 26 propagierenden Laserstrahls 2 und des zurück reflektierten, in entgegen gesetzter Richtung propagierenden Laserstrahls 2a insgesamt einen Gang-unterschied von $\lambda/2$ erzeugt und so die gewünschte Drehung der Polarisationsrichtung um 90° bewirkt. Es versteht sich, dass zu diesem Zweck auch andere phasenschiebende oder polarisationsdrehende optische Elemente verwendet werden können, die zwischen der Polarisatoranordnung 1 und dem Target-Material 26 angeordnet sind.

Die Filterung des s-polarisierten zurück reflektierten Laserstrahls 2a in der Polarisatoranordnung 1 erfolgt durch Reflexion an den jeweiligen Strahlaustrittsflächen 5b, 6b, ... für den einfallenden Laserstrahl 2, die für den zurück reflektierten Laserstrahl 2a Strahleintrittsflächen bilden. Der an der jeweiligen Strahlaustrittsfläche 5b, 6b, ... reflektierte s-polarisierte Strahlungsanteil kann zu einer Strahlfalle 19 umgelenkt werden. Die Strahlfalle 19 kann wie in Fig. 4 dargestellt außerhalb einer Halterung 18 angeordnet sein, in der die plattenförmigen optischen Elemente 5 bis 16 aufgenommen und in ihrer relativen Lage zueinander fixiert sind. Alternativ kann die Strahlfalle 19 ggf. in die Halterung 18 bzw. in ein entsprechendes Gehäuse der Polarisatoranordnung 1 integriert werden, sofern eine ausreichende Kühlung sichergestellt ist.

In Fig. 4 ebenfalls dargestellt ist ein optischer Filter 17a, der zur Filterung von (in Fig. 4 nicht dargestellten) Strahlungsanteilen dient, die unter einem Winkel zur Strahlrichtung 3 des eintretenden Laserstrahls 2 verlaufen. Derartige Strahlungsanteile, die durch an den plattenförmigen optischen Elementen 5 bis 10 bzw. 5 bis 16 reflektierte Teilstrahlen erzeugt werden, können aufgrund ihrer Ausrichtung unter einem Winkel zur Strahlrichtung 3 des eintretenden Laserstrahls 2 räumlich von dem eintretenden Laserstrahl 2 separiert werden, der den Hauptstrahl bildet. Die in Fig. 4 gezeigte EUV-Strahlungserzeugungsvorrichtung 20 weist auch einen weiteren optischer Filter 17b auf, der zur Filterung von Strahlungsanteilen dient, die unter einem Winkel zur Strahlrichtung 4 des austretenden Laserstrahls 2 verlaufen. Da die unter dem Winkel ausgerichteten Strahlungsanteile im Strahlprofil des Laserstrahls 2 radial außen angeordnet sind, können diese auch durch einen optischen Filter 17a,b in Form einer herkömmlichen Blende abgeschnitten werden.

Es versteht sich, dass die Polarisatoranordnung 1 oder ggf. eine weitere Polarisatoranordnung auch an anderer Stelle in der EUV-Strahlungserzeugungsvorrichtung 20 angeordnet werden kann, beispielsweise in der Strahlführungseinrichtung 24, um einen linear polarisierten Laserstrahl 2 zu erzeugen bzw. um einen optischen Isolator zu bilden.

Die weiter oben beschriebene Polarisatoranordnung 1 weist zusätzlich zu der kompakten Bauweise den Vorteil auf, dass Temperatur-Effekte, insbesondere Temperaturschwankungen, sich nicht auf die Performance der Polarisatoranordnung 1 auswirken, da deren Design-Prinzip auf der geometrischen Trennung von Strahlen beruht. Aus diesem Grund führen geringe Veränderungen im Brechungsindex bzw. in der Dicke der plattenförmigen optischen Elemente 5 bis 16, wie sie bei hohen Strahlungsleistungen auftreten können, nicht zu einer Beeinträchtigung der Performance der Polarisatoranordnung 1. Da das Strahl-Pointing kompensiert wird, wirken sich auch chromatische Abweichungen bei der Verwendung von Laserstrahlen 2 mit geringfügig unterschiedlichen Wellenlängen, wie sie für den Vor-Puls und für den Haupt-Puls üblich sind, ebenfalls nur geringfügig aus (beispielsweise mit einem Strahlversatz im Mikrometer-Bereich).

**Patentansprüche**

1. Polarisatoranordnung (1) zur Polarisation eines Laserstrahls (2), umfassend:

eine Mehrzahl von im Strahlweg des Laserstrahls (2) angeordneten plattenförmigen optischen Elementen (5, ..., 10; 5, ..., 16), die jeweils eine Strahleintrittsfläche (5a, 6a, ...) für den Laserstrahl (2) und eine Strahlaustrittsfläche (5b, 6b, ...) für den Laserstrahl (2) aufweisen, wobei die Strahleintrittsfläche (5a, 6a, ...) eines jeweiligen plattenförmigen optischen Elements (5, ..., 10; 5, ..., 16) unter dem Brewster-Winkel ($\alpha_B$) zum Laserstrahl (2) ausgerichtet ist, wobei die Strahleintrittsflächen (5a, 6a, ...) und die Strahlaustrittsflächen (5b, 6b, ...) der plattenförmigen optischen Elemente (5, ..., 10; 5, ..., 16) jeweils unter mindestens einem von Null verschiedenen Keilwinkel ($\gamma_1$, $\gamma_2$) zueinander ausgerichtet sind,
**dadurch gekennzeichnet,**
**dass** bei mindestens einem plattenförmigen optischen Element (6, 8, 10) ein erster Keilwinkel ($\gamma_1$) in einer Einfallsebene (XY) des Laserstrahls (2) auf die Strahleintrittsfläche (5a, 6a, ...) des optischen Elements (6, 8, 10) liegt und dass ein zweiter Keilwinkel ($\gamma_2$) in einer senkrecht zur Einfallsebene (XY) des Laserstrahls (2) verlaufenden Ebene (XZ) liegt.

2. Polarisatoranordnung nach Anspruch 1, bei der bei mindestens einem plattenförmigen optischen Element (5, ..., 10) der Keilwinkel ($\gamma_1$) in einer Einfallsebene (XY) des Laserstrahls (2) auf die Strahleintrittsfläche (5a, 6a, ...) liegt.

3. Polarisatoranordnung nach Anspruch 1 oder 2, bei der bei mindestens einem plattenförmigen optischen Element (5, ..., 10) der Keilwinkel ($\gamma_2$) in einer senkrecht zur Einfallsebene (XY) des Laserstrahls (2) auf die Strahleintrittsfläche (5a, 6a, ...) verlaufenden Ebene (XZ) liegt.

4. Polarisatoranordnung nach einem der vorhergehenden Ansprüche, bei der die plattenförmigen optischen Elemente (5, ..., 10; 5, ..., 16) jeweils denselben Keilwinkel ($\gamma_1$) in einer Einfallsebene (XY) des Laserstrahls (2) auf die jeweilige Strahleintrittsfläche (5a, 6a, ...) und/oder jeweils denselben Keilwinkel ($\gamma_2$) in einer senkrecht zur Einfallsebene (XY) des Laserstrahls (2) verlaufenden Ebene (XZ) aufweisen.

5. Polarisatoranordnung nach einem der vorhergehenden Ansprüche, bei welcher der mindestens eine Keilwinkel ($\gamma_1$, $\gamma_2$) bei weniger als 1,0°, bevorzugt bei weniger als 0,5° liegt.

6. Polarisatoranordnung nach einem der vorhergehenden Ansprüche, bei welcher jeweils zwei im Strahlweg aufeinander folgende plattenförmige optische Elemente (5, 6; 6, 7; ...) in Strahlrichtung (3) des einfallenden Laserstrahls (2) einen minimalen Abstand (A) von weniger als 5 mm voneinander aufweisen.

7. Polarisatoranordnung nach einem der vorhergehenden Ansprüche, bei der bei mindestens zwei im Strahlweg des Laserstrahls (2) aufeinanderfolgenden plattenförmigen optischen Elementen (5, 6) die Strahleintrittsflächen (5a, 6a) und die Strahlaustrittsflächen (5b, 6b) nicht parallel zueinander ausgerichtet sind.

8. Polarisatoranordnung nach einem der vorhergehenden Ansprüche, bei welcher mindestens zwei im Strahlweg des Laserstrahls (2) aufeinanderfolgende plattenförmige optische Elemente (5, ..., 10) mit ihren in einer gemeinsamen Ebene (XY) liegenden Keilwinkeln ($\gamma_1$) gleichsinnig ausgerichtet sind.

9. Polarisatoranordnung nach Anspruch 8, bei welcher mindestens drei im Strahlweg des Laserstrahls (2) aufeinander folgende, gleichsinnig ausgerichtete plattenförmige optische Elemente (5, ..., 10) um jeweils denselben Drehwinkel ($\delta_1$) zueinander verdreht sind, der bevorzugt dem Betrag eines Ablenk-Winkels ($\delta_1$) beim Durchtritt des Laserstrahls (2) durch ein jeweiliges optisches Element (5, ..., 10) entspricht.

10. Polarisatoranordnung nach einem der vorhergehenden Ansprüche, bei welcher bei mindestens zwei im Strahlweg des Laserstrahls (2) aufeinander folgenden plattenförmigen optischen Elementen (5, 6) die jeweiligen in einer gemeinsamen Ebene (XY, XZ) liegenden Keilwinkel ($\gamma_1$; $\gamma_2$) entgegengesetzt orientiert sind, wobei die beiden plattenförmigen optischen Elemente (5, 6) bevorzugt um einen Drehwinkel ($\delta_1$; $\delta_2$) zueinander verdreht sind, der dem Betrag eines Ablenk-Winkels ($\delta_1$, $\delta_2$) beim Durchtritt des Laserstrahls (2) durch ein jeweiliges optisches Element (5, 6) entspricht.

11. Polarisatoranordnung nach Anspruch 10, bei welcher mindestens zwei Paare von plattenförmigen optischen Elementen (5, 6; 7, 8;...) mit entgegengesetzt orientiertem Keilwinkel ($\gamma_1$, $\gamma_2$) im Strahlengang des Laserstrahls (2) nacheinander angeordnet sind, und wobei die Strahleintrittsflächen (5a, 6a; 7a, 8a; ...) und die Strahlaustrittsflächen (5b, 6b; 7b, 8b; ...) der mindestens zwei Paare von plattenförmigen optischen Elementen (5, 6; 7, 8;...) jeweils parallel zueinander ausgerichtet sind.

12. Polarisatoranordnung nach einem der Ansprüche 10 oder 11, bei welcher mindestens zwei Paare von plattenförmigen optischen Elementen (5, 6; 7, 8;...) mit entgegengesetzt orientiertem Keilwinkel ($\gamma_1$) im Strahlengang angeordnet sind, und wobei die Strahleintrittsflächen (5a, 6a; 7a, 8a; ...) und die Strahlaustrittsflächen (5b, 6b; 7b, 8b; ...) der mindestens zwei Paare von plattenförmigen optischen Elementen (5, 6; 7, 8;...) spiegelsymmetrisch bezüglich einer Ebene (E) senkrecht zur Strahlrichtung (3) des einfallenden Laserstrahls (2) ausgerichtet sind.

13. Polarisatoranordnung nach einem der vorhergehenden Ansprüche, weiter umfassend: eine Halterung (18) zur gemeinsamen Fixierung der plattenförmigen optischen Elemente (5, ..., 10; 5, ..., 16).

14. Polarisatoranordnung nach einem der vorhergehenden Ansprüche, weiter umfassend: einen im Strahlweg des eintretenden Laserstrahls (2) vor der Mehrzahl von plattenförmigen optischen Elementen (5, ..., 10; 5, ..., 16) angeordneten optischen Filter (17a) und/oder einen im Strahlweg des austretenden Laserstrahls (2) nach der Mehrzahl von plattenförmigen optischen Elementen (5, ..., 10; 5, ..., 16) angeordneten optischen Filter (17b) zur Filterung von unter einem Winkel zur Strahlrichtung (4) des eintretenden und/oder des austretenden Laserstrahls (2) verlaufenden Strahlungsanteilen.

15. EUV-Strahlungserzeugungsvorrichtung (20), umfassend:
eine Treiberlaseranordnung (29) zur Erzeugung eines Laserstrahls (2), eine Vakuum-Kammer (28), in der ein Target-Material (26) anordenbar ist, eine Strahlführungseinrichtung (24) zur Führung des Laserstrahls (2) von der Treiberlasereinrichtung (29) zum Target-Material (26), sowie eine Polarisatoranordnung (1) nach einem der vorhergehenden Ansprüche.

16. EUV-Strahlungserzeugungsvorrichtung nach Anspruch 15, weiter umfassend:
eine Phasenschiebe-Einrichtung (30), die zwischen der Polarisatoranordnung (1) und dem Target-Material (26) angeordnet ist, wobei die Phasenschiebe-Einrichtung (30) zur Bildung eines am Target-Material (26) reflektierten Laserstrahls (2a) ausgebildet ist, dessen Polarisationsrichtung (s) senkrecht zur Polarisationsrichtung (p) des zum Target-Material (26) propagierenden Laserstrahls (2) ausgerichtet ist.

**Claims**

1. A polarizer arrangement (1) for polarizing a laser beam (2), comprising: a plurality of plate-shaped optical elements (5, ..., 10; 5, ..., 16) arranged in the beam path of the laser beam, each of which comprises a beam entry surface (5a, 6a, ...) for the laser beam (2) and a beam exit surface (5b, 6b, ...) for the laser beam (2), wherein the beam entry surface (5a, 6a, ...) of a respective plate-shaped optical element (5, ..., 10; 5, ..., 16) is oriented at the Brewster angle ($\alpha_B$) relative to the laser beam (2), wherein the beam entry surfaces (5a, 6a, ...) and the beam exit surfaces (5b, 6b, ...) of the plate-shaped optical elements (5, ..., 10; 5, ..., 16) are each oriented relative to each other at at least one wedge angle ($\gamma_1, \gamma_2$) different from zero
**characterized in**
**that** for at least one plate-shaped optical element (6, 8, 10) a first wedge angle ($\gamma_1$) lies in a plane of incidence (XY) of the laser beam (2) on the beam entry surface (5a, 6a, ...) of the optical element (6, 8, 10) and that a second wedge angle ($\gamma_2$) lies in a plane (XZ) extending perpendicularly to the plane of incidence (XY) of the laser beam (2).

2. The polarizer arrangement as claimed in claim 1, in which for at least one plate-shaped optical element (5, ..., 10) the wedge angle ($\gamma_1$) lies in a plane of incidence (XY) of the laser beam (2) on the beam entry surface (5a, 6a, ...).

3. The polarizer arrangement as claimed in claim 1 or 2, in which for at least one plate-shaped optical element (5, ..., 10) the wedge angle ($\gamma_2$) lies in a plane (XZ) extending perpendicularly to the plane of incidence (XY) of the laser beam (2) on the beam entry surface (5a, 6a, ...).

4. The polarizer arrangement as claimed in one of the preceding claims, in which the plate-shaped optical elements (5, ..., 10; 5, ..., 16) respectively comprise the same wedge angle ($\gamma_1$) in a plane of incidence (XY) of the laser beam (2) on the respective beam entry surface (5a, 6a, ...) and/or the same wedge angle ($\gamma_2$) respectively in a plane (XZ) extending perpendicularly to the plane of incidence (XY) of the laser beam (2).

5. The polarizer arrangement as claimed in one of the preceding claims, in which the at least one wedge angle ($\gamma_1$, $\gamma_2$) is less than 1.0°, preferably less than 0.5°.

6. The polarizer arrangement as claimed in one of the preceding claims, in which respectively two plate-shaped optical elements (5, 6; 6, 7; ...) following one another in the beam path in a beam direction (3) of the entering laser beam (2) comprise a minimal distance (A) of less than 5 mm from one another.

7. The polarizer arrangement as claimed in one of the preceding claims, in which for at least two plate-shaped optical elements (5, 6) following one another in the beam path of the laser beam (2) the beam entry surfaces (5a, 6a) and the beam exit surfaces (5b, 6b) are not oriented parallel to each other.

8. The polarizer arrangement as claimed in one of the preceding claims, in which at least two plate-shaped optical elements (5,..., 10) following one another in the beam path of the laser beam (2) are oriented with their wedge angles ($\gamma_1$), which lie in a common plane (XY), in the same direction.

9. The polarizer arrangement as claimed in claim 8, in which at least three plate-shaped optical elements (5, ..., 10) following one another in the beam path of the laser beam (2) and oriented in the same direction are rotated relative to each other about the same angle of rotation ($\delta_1$), which preferably corresponds to the amount of a deflecting angle ($\delta_1$) as the laser beam (2) passes through a respective optical element (5, ..., 10).

10. The polarizer arrangement as claimed in one of the preceding claims, in which for at least two plate-shaped optical elements (5, 6) following one another in the beam path of the laser beam (2) the respective wedge angles ($\gamma_1$, $\gamma_2$) lying in a common plane (XY, XZ) are oriented in opposite directions, wherein the two plate-shaped optical elements (5, 6) are preferably rotated relative to each other at an angle of rotation ($\delta_1$, $\delta_2$), which corresponds to the amount of a deflecting angle ($\delta_1$, $\delta_2$) as the laser beam (2) passes through a respective optical element (5, 6).

11. The polarizer arrangement as claimed in claim 10, in which at least two pairs of plate-shaped optical elements (5, 6; 7, 8;...) with oppositely oriented wedge angles ($\gamma_1$, $\gamma_2$) are arranged in the beam path of the laser beam (2) one behind the other, and wherein the beam entry surfaces (5a, 6a; 7a, 8a;...) and the beam exit surfaces (5b, 6b; 7b, 8b; ...) of the at least two pairs of plate-shaped optical elements (5, 6; 7, 8;...) are each oriented parallel to each other.

12. The polarizer arrangement as claimed in one of claims 10 or 11, in which at least two pairs of plate-shaped optical elements (5, 6; 7, 8;...) with oppositely oriented wedge angle ($\gamma_1$) are arranged in the beam path, and wherein the beam entry surfaces (5a, 6a; 7a, 8a; ...) and the beam exit surfaces (5b, 6b; 7b, 8b; ...) of the at least two pairs of plate-shaped optical elements (5, 6; 7, 8; ...) are oriented mirror-symmetrically relative to a plane (E) perpendicular to the beam direction (3) of the incident laser beam (2).

13. The polarizer arrangement as claimed in one of the preceding claims, further comprising: a mounting (18) for jointly fixing the plate-shaped optical elements (5, ..., 10; 5, ..., 16).

14. The polarizer arrangement as claimed in one of the preceding claims, further comprising: an optical filter (17a) arranged in the beam path of the entering laser beam (2) upstream of the plurality of plate-shaped optical elements (5, ..., 10; 5, ..., 16) and/or an optical filter (17b) arranged in the beam path of the exiting laser beam (2) downstream of the plurality of plate-shaped optical elements (5, ..., 10; 5, ..., 16) for filtering radiation parts passing at an angle to the beam direction (4) of the entering and/or the exiting laser beam (2).

15. An EUV radiation generating device (20) comprising: a driver laser arrangement (29) for generating a laser beam (2), a vacuum chamber (28) in which a target material (26) can be arranged, a beam guidance device (24) for guiding the laser beam (2) from the driver laser device (29) to the target material (26), as well as
a polarizer arrangement (1) as claimed in one of the preceding claims.

16. The EUV radiation generating device as claimed in claim 15, further comprising: a phase-shifting device (30), which is arranged between the polarizer arrangement (1) and the target material (26), wherein the phase-shifting device (30) is configured for forming a laser beam (2a) reflected at the target material (26), the polarization direction (s) of which is oriented perpendicularly to the polarization direction (p) of the laser beam (2) propagating in direction of the target material (26).

**Revendications**

1. Dispositif de polarisation (1) conçu pour polariser un faisceau laser (2), comprenant :

   une pluralité d'éléments optiques (5, ..., 10 ; 5, ..., 16) de forme aplatie, placés sur le trajet de rayonnement du faisceau laser (2) et munis, respectivement, d'une surface d'entrée (5a, 6a, ...) dévolue au faisceau laser (2) et d'une surface de sortie (5b, 6b, ...) dévolue audit faisceau laser (2), la surface (5a, 6a, ...) d'entrée du faisceau dans un élément optique aplati considéré (5, ..., 10 ; 5, ..., 16) étant orientée suivant l'angle de Brewster ($\alpha_B$) par rapport audit faisceau laser (2),

   les surfaces (5a, 6a, ...) d'entrée du faisceau et les surfaces (5b, 6b, ...) de sortie dudit faisceau desdits éléments optiques aplatis (5, ..., 10 ; 5, ..., 16) étant respectivement orientées, les unes par rapport aux autres, suivant au moins un angle de coin ($\gamma_1$, $\gamma_2$) différant de zéro,

   **caractérisé par le fait**

   **que**, dans le cas d'au moins un élément optique aplati (6, 8, 10), un premier angle de coin ($\gamma_1$) est situé dans un plan (XY) d'incidence du faisceau laser (2) sur la surface (5a, 6a, ...) d'entrée du faisceau dans ledit élément optique (6, 8, 10) ; et par le fait qu'un second angle de coin ($\gamma_2$) est situé dans un plan (XZ) s'étendant perpendiculairement audit plan (XY) d'incidence dudit faisceau laser (2).

2. Dispositif de polarisation selon la revendication 1, dans lequel, dans le cas d'au moins un élément optique aplati (5, ..., 10), l'angle de coin ($\gamma_1$) est situé dans un plan (XY) d'incidence du faisceau laser (2) sur la surface (5a, 6a, ...) d'entrée dudit faisceau.

3. Dispositif de polarisation selon la revendication 1 ou 2, dans lequel, dans le cas d'au moins un élément optique aplati (5, ..., 10), l'angle de coin ($\gamma_2$) est situé dans un plan (XZ) s'étendant perpendiculairement au plan (XY) d'incidence du faisceau laser (2) sur la surface (5a, 6a, ...) d'entrée dudit faisceau.

4. Dispositif de polarisation selon l'une des revendications précédentes, dans lequel les éléments optiques aplatis (5, ..., 10 ; 5, ..., 16) présentent, à chaque fois, le même angle de coin ($\gamma_1$) dans un plan (XY) d'incidence du faisceau laser (2) sur la surface respective (5a, 6a, ...) d'entrée dudit faisceau et/ou, à chaque fois, le même angle de coin ($\gamma_2$) un plan (XZ) s'étendant perpendiculairement audit plan (XY) d'incidence dudit faisceau laser (2).

5. Dispositif de polarisation selon l'une des revendications précédentes, dans lequel l'angle de coin ($\gamma_1$, $\gamma_2$) à présence minimale est inférieur à 1,0°, de préférence inférieur à 0,5°.

6. Dispositif de polarisation selon l'une des revendications précédentes, dans lequel deux éléments optiques aplatis (5, 6 ; 6, 7 ;...) en succession mutuelle sur le trajet de rayonnement sont respectivement espacés l'un de l'autre, dans la direction (3) de rayonnement du faisceau laser (2) incident, d'une distance minimale (A) inférieure à 5 mm.

7. Dispositif de polarisation selon l'une des revendications précédentes, dans lequel, dans le cas d'au moins deux éléments optiques aplatis (5,6) en succession mutuelle sur le trajet de rayonnement du faisceau laser (2), les surfaces (5a, 6a) d'entrée du faisceau et les surfaces (5b, 6b) de sortie dudit faisceau ne sont pas orientées parallèlement les unes aux autres.

8. Dispositif de polarisation selon l'une des revendications précédentes, dans lequel au moins deux éléments optiques aplatis (5, ..., 10), en succession mutuelle sur le trajet de rayonnement du faisceau laser (2), sont orientés dans le même sens par leurs angles de coin ($\gamma_1$) situés dans un plan commun (XY).

9. Dispositif de polarisation selon la revendication 8, dans lequel au moins trois éléments optiques aplatis (5, ..., 10), en succession mutuelle sur le trajet de rayonnement du faisceau laser (2) et orientés dans le même sens, sont déjetés à chaque fois, les uns par rapport aux autres, du même écart angulaire ($\delta_1$) correspondant, de préférence, à la valeur d'un angle de décalage ($\delta_1$) lors du passage dudit faisceau laser (2) par un élément optique (5, ..., 10) considéré.

10. Dispositif de polarisation selon l'une des revendications précédentes, dans lequel, dans le cas d'au moins deux éléments optiques aplatis (5, 6) en succession mutuelle sur le trajet de rayonnement du faisceau laser (2), les angles de coin ($\gamma_1$, $\gamma_2$) respectifs, situés dans un plan commun (XY, XZ), sont orientés dans des sens opposés, lesdits deux éléments optiques aplatis (5, 6) étant préférentiellement déjetés, l'un par rapport à l'autre, d'un écart angulaire ($\delta_1$ ; $\delta_2$) correspondant à la valeur d'un angle de décalage ($\delta_1$, $\delta_2$) lors du passage dudit faisceau laser (2) par un élément optique (5, 6) considéré.

**11.** Dispositif de polarisation selon la revendication 10, dans lequel au moins deux paires d'éléments optiques aplatis (5, 6 ; 7, 8 ; ...) à angles de coin ($\gamma_1$, $\gamma_2$) orientés dans des sens opposés sont agencées les unes après les autres, sur le trajet de rayonnement du faisceau laser (2), les surfaces (5a, 6a ; 7a, 8a ; ...) d'entrée du faisceau et les surfaces (5b, 6b ; 7b, 8b; ...) de sortie dudit faisceau, dans lesdites deux paires à présence minimale d'éléments optiques aplatis (5, 6; 7, 8 ; ...) et hors desdites paires, étant alors respectivement orientées parallèlement les unes aux autres.

**12.** Dispositif de polarisation selon l'une des revendications 10 ou 11, dans lequel au moins deux paires d'éléments optiques aplatis (5, 6 ; 7, 8 ; ...) à angle de coin ($\gamma_1$) orienté en sens inverse sont placées sur le trajet de rayonnement, les surfaces (5a, 6a ; 7a, 8a; ...) d'entrée du faisceau et les surfaces (5b, 6b ; 7b, 8b; ...) de sortie dudit faisceau, dans lesdites deux paires à présence minimale d'éléments optiques aplatis (5, 6 ; 7, 8 ; ...) et hors desdites paires, étant alors orientées avec symétrie spéculaire par rapport à un plan (E) perpendiculaire à la direction (3) de rayonnement du faisceau laser (2) incident.

**13.** Dispositif de polarisation selon l'une des revendications précédentes, comprenant, en outre : un support (18) affecté à la consignation à demeure commune des éléments optiques aplatis (5, ..., 10 ; 5, ..., 16).

**14.** Dispositif de polarisation selon l'une des revendications précédentes, comprenant, par ailleurs : un filtre optique (17a) placé sur le trajet de rayonnement du faisceau laser (2) entrant, en amont de la pluralité d'éléments optiques aplatis (5, ..., 10 ; 5, ..., 16), et/ou un filtre optique (17b) placé sur le trajet de rayonnement du faisceau laser (2) sortant, en aval de ladite pluralité d'éléments optiques aplatis (5, ..., 10 ; 5, ..., 16), en vue de filtrer des parts constitutives de rayonnement s'étendant suivant un angle par rapport à la direction (4) de rayonnement du faisceau laser (2) entrant et/ou sortant.

**15.** Dispositif (20) générateur de rayonnements UVE, comprenant :

un agencement laser pilote (29), destiné à engendrer un faisceau laser (2),
une chambre à vide (28), dans laquelle un matériau cible (26) peut être placé,
un appareil (24) guide-faisceau, conçu pour guider ledit faisceau laser (2) vers ledit matériau cible (26) à partir dudit agencement laser pilote (29),
ainsi qu'un dispositif de polarisation (1) conforme à l'une des revendications précédentes.

**16.** Dispositif générateur de rayonnements UVE, selon la revendication 15, comprenant en outre :
un appareil de déphasage (30) interposé entre le dispositif de polarisation (1) et le matériau cible (26), lequel appareil de déphasage (30) est conçu pour former un faisceau laser (2a) réfléchi sur ledit matériau cible (26), dont la direction de polarisation (s) est orientée perpendiculairement à la direction de polarisation (p) du faisceau laser (2) se propageant vers ledit matériau cible (26).

Fig. 1

Fig. 2

Fig. 3a

Fig. 3b

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **GEORGE R. BIRD et al.** Pile-of-Plates Polarizers for the Infrared: Improvement in Analysis and Design. *JOURNAL OF THE OPTICAL SOCIETY OF AMERICA,* 01. Marz 1959, vol. 49 (3), 235

- **NARAYAN P. MURARKA et al.** Extinction ratio of germanium wedge-plate infrared polarizers. *APPLIED OPTICS,* 01. Oktober 1981, vol. 20 (19), 3275